Europäisches Patentamt

European Patent Office

Office européen des brevets

(19)

(11) Veröffentlichungsnummer : **0 134 885**
**B1**

(12)  **EUROPÄISCHE PATENTSCHRIFT**

(45) Veröffentlichungstag der Patentschrift :
07.03.90

(51) Int. Cl.⁵ : **D 06 N   7/00**

(21) Anmeldenummer : 84104357.3

(22) Anmeldetag : 17.04.84

(54) Herstellungsverfahren für zugfeste, undurchlässige, biegsame Bänder Insbesondere für Pressen zum Entwässern von Faserstoffbahnen.

(30) Priorität : 25.05.83 DE 3318984

(43) Veröffentlichungstag der Anmeldung :
27.03.85 Patentblatt 85/13

(45) Bekanntmachung des Hinweises auf die Patenterteilung : 07.03.90 Patentblatt 90/10

(84) Benannte Vertragsstaaten :
AT BE CH DE FR GB IT LI NL SE

(56) Entgegenhaltungen :
EP—A— 0 013 890
FR—A— 1 210 269
FR—A— 2 512 856
GB—A—   893 637
GB—A— 2 106 557
US—A— 3 278 667
Die Akte enthält technische Angaben, die nach dem Eingang der Anmeldung eingereicht wurden und die nicht in dieser Patentschrift enthalten sind..

(73) Patentinhaber : F. Oberdorfer GmbH & Co. KG Industriegewebe-Technik
Kurze Strasse 11
D-7920 Heidenheim (DE)

(72) Erfinder : Krenkel, Bernhard, Dr.
Waiblinger Strasse 14
D-7290 Heidenheim (DE)
Erfinder : Joos, Heinz
Walter-Bauersfeld-Strasse
D-7920 Heidenheim (DE)
Erfinder : Schön, Werner
Heinrich-Maier-Str.17
7920 Heidenheim (DE)

(74) Vertreter : Kern, Wolfgang Dipl.-Ing. et al
Patentanwälte Kern, Brehm & Partner Albert-Rosshaupter-Strasse 73
D-8000 München 70 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Herstellungsverfahren für zugfeste, undurchlässige, biegsame Bänder, insbesondere für pressen zum Entwässern von Faserstoffbahnen gemäß Oberbegriff des Anspruchs 1.

Die aus der US-A-3 278 667 bekannte Verfahrensweise des Aufbringens einer blasenfreien, fließfähigen Mischung eines Prepolymers auf ein Armierungsband hat sich insofern als nachteilig erwiesen, als die Aufbringung der Prepolymermischung zwischen zwei Förderbändern erfolgt, von denen das eine das Armierungsband selbst sein kann, wenn das Band einseitig beschichtet wird.

Die GB-A-893 637 spricht nur davon, daß das Armierungsgewebeband in einem geeigneten Rahmen innerhalb einer Gießform, die zweckmäßigerweise beheizt wird, gestreckt gehalten wird.

Die GB-A-2 106 557 beschreibt nur die Konstruktion einer Entwässerungspresse und insbesondere den Aufbau eines in dieser verwendeten Preßbandes, ohne irgendwelche Herstellungsschritte für das Band anzugeben.

Ein Band dieser Art ist in der DE-OS 32 31 039 und auch in der DE-OS 32 35 468 beschrieben. Dieses Band weist als Armierungsband ein Gewebeband auf, das so mit einem Polymerisat durchsetzt wird, daß das Polymerisat in Gestalt einer festen Bahn auf das gespannt gehaltene Gewebeband aufgelegt und entweder durch Erwärmen über seinen Schmelzpunkt zum Einfließen in das Gewebeband oder durch Einstreichen oder Einwalzen des erwärmten Polymerisats mittels eines Streichmessers oder einer Gegenwalze zum Durchdringen des Gewebebandes veranlaßt wird. Bei diesem Verfahren ist Lunkerbildung nicht ausgeschlossen, so daß wenigstens dann, wenn die Oberfläche des Bandes nachträglich glattgeschliffen wird, Öffnungen im Band entstehen können, durch die eine Flüssigkeit, z. B. eine Schmierflüssigkeit, zumindest bei Druckanwendung von einer Bandseite auf die andere gelangen kann.

Die Aufgabe der Erfindung besteht deshalb darin, das Verfahren der eingangs genannten Art so zu verbessern, daß die geschilderten Nachteile vermieden werden und die Möglichkeit, steifere oder biegsamere, starke oder dünne Bänder und Bänder von geringerer oder höherer Elastizität quer zu ihrer Flächenausdehnung herzustellen, verbessert wird.

Für die Lösung dieser Aufgabe wurden drei verschiedene Wege gefunden, die in den Kennzeichnungsteilen der Ansprüche 1, 2 und 3 enthalten sind.

Das Aufgießen der Prepolymermischung auf die Oberfläche des auf der Innenseite eines rotierenden Zylinders liegenden Armierungsbandes hat zur Folge, daß das noch unvernetzte Material unter Fliehkraft- bzw. Schwerkrafteinfluß gelangt und das Armierungsband dadurch vollständig durchdringt.

Die Mischung aus Prepolymer und Vernetzer kann je nach den geforderten technologischen Werten der Gewebebeschichtung aus unterschiedlichen Anteilen von prepolymer und Vernetzer zusammengesetzt sein. Es lassen sich auf diese Weise steifere und biegsamere Bänder, starke oder dünne Bänder und Bänder von geringerer oder höherer Elastizität quer zu ihrer Flächenausdehnung gewinnen. Einen Beitrag zur Ausprägung des Vernetzungsgrades und damit zu den Eigenschaften des Bandes kann auch die während der Vernetzung angewandte Temperatur leisten, welche im Bereich zwischen etwa 20° und 150° C liegen kann.

Schließlich ist für die Bandstärke und das mechanische Verhalten des Bandes auch die Gestaltung des Armierungsbandes mit ausschlaggebend. Das Armierungsband kann entsprechend einer Ausgestaltung der Erfindung deshalb ein ein- oder mehrlagiges Gewebe aus Fäden verschiedener Werkstoffe sein, wie Polyamid, Polyester, Kevlar® Poly(1,4-phenylenterephthalamid) oder Metall oder auch aus Kombination dieser Stoffe.

Die günstige Verarbeitbarkeit der blasenfreien, fließfähigen Mischung eines Prepolymers mit einem Vernetzer läßt die Herstellung verschiedener Verfahrensvarianten zu, von denen einige vorteilhafte Ausführungsformen nachfolgend aufgeführt werden sollen.

Da für Pressen zum Entwässern von Faserbahnen die zugfesten, undurchlässigen und biegsamen Bänder in endloser Form benötigt werden, wird das Armierungsband, vorzugsweise ein Gewebeband, endlos gemacht, was bei offen gewebten Bändern durch Nahten in an sich bekannter Weise erfolgt. Ein derartiges endloses Gewebeband kann dann auf einen rotierenden Zylinder aufgespannt werden, und die Mischung aus Prepolymer und Vernetzer wird dann in einem Gießstrahl auf das aufgespannte Gewebeband aufgegossen, wobei der Strahl langsam parallel zur Zylinderachse verschoben wird. Die ständige Richtungsänderung der Schwerkraft relativ zum Gewebe während der Rotation des Zylinders bewirkt eine vollständige Einhüllung und Durchdringung auch dichter Gewebebänder, so daß eine lückenlose Beschichtung mit wenigstens einer glatten Oberfläche zum Zylinder hin erhalten wird, wobei über die Zylinder selbst die Temperaturregelung erfolgen kann.

Nach einer zweiten Ausführungsform des erfindungsgemäßen Herstellungsverfahrens kann das Gewebeband an der Innenwand eines schnell rotierenden Hohlzylinders anliegen und durch Übergießen mit der Mischung aus Prepolymer und Vernetzer getränkt werden. Die Zylinderachse liegt dabei im wesentlichen waagrecht. Hier kann durch eine Heizvorrichtung im Zylinder eine günstige Temperaturregelung vorgenommen werden.

Für die Herstellung längerer Bänder kann das als Armierung dienende Gewebeband über zwei oder mehr Rollen geführt und auf das sich bewegende Band die Mischung aus Prepolymer und Vernetzer in gleichmässiger Verteilung aufgegossen werden. Es versteht sich, daß die Zugabe der fließfähigen Mischung in diesem Fall nur langsam erfolgt, damit die Vernetzung während des Durchtretens durch das Gewebe fortschreitet und nur wenig bis gar keine fließfähige Masse von der Unterseite des Gewebes abtropft.

Schließlich ist für die Herstellung sehr starker Bänder die Verwendung senkrecht oder schräg stehender Gießformen in die das Armierungsgewebeband eingelegt wird, vorteilhaft, das dann von der Mischung aus Prepolymer und Vernetzer umgossen wird.

Für das obige Herstellungsverfahren ist auch die Bezeichnung Polyurethan-Auftragsverfahren verwendbar, bei dem ein Kaltvergiessen der auf dem Markt erhältlichen Produkte Polyol PU 308® und Desmodur PU 309® und ein Heißvergießen der ebenfalls erhältlichen Produkte Desmodur PU 0137® und Baytec 110® erfolgt. Dabei läßt sich beispielsweise ein 5 Meter langes und 10 Meter breites Gewebeband unter geeigneten Bedingungen in ca. 1 1/2 Stunden beschichten. Die beim Beschichten verursachte rillige Oberfläche kann nach Abbinden der Produkte nach einer vorgeschriebenen Aushärtezeit zur Erzielung einer glatten Oberfläche abgedreht oder nass geschliffen werden.

Derartige Polyurethan-Gießanlagen arbeiten beispielsweise mit einer Beschichtungstrommel von 4,5 m Durchmesser bei einer Drehzahl von 10 bis 15 U/min., wobei die Dicke der Rohbeschichtung 5 bis 7 mm und die Dicke der Fertigbeschichtung ca. 3 mm beträgt.

Die Beschichtung kann auch beispielsweise auf zwei Walzen erfolgen, deren Durchmesser 400 bis 600 mm beträgt. In diesem Fall wird mit einer Bandgeschwindigkeit von ca. 50 m/min. und einem Düsenvorschub für die Aufbringung des Mischgutes von 50 bis 100 mm/min. gearbeitet. Für die oben als zweite Verfahrensvariante angegebene Möglichkeit der Gewebebandbeschichtung in einem rotierenden Hohlzylinder wird der Zylinderdurchmesser entsprechend der Bandlänge gewählt und mit Schleuderdrehzahlen von bis zu 600 U/min. gearbeitet.

Die auf diese Weise hergestellten beschichteten Gewebebänder haben sich insbesondere als Antriebsriemen in bekannten Maschinen und Anlagen bewährt sowie als Transportbänder im Bergbau, Baugewerbe und in der Landwirtschaft und ganz besonders für Entwässerungspressen.

## Patentansprüche

1. Verfahren zur Herstellung eines zugfesten, undurchlässigen, biegsamen Bandes, das wenigstens ein Zugkräfte aufnehmendes Armierungsband enthält, welches wenigstens einseitig durch eine es durchsetzende, undurchlässige Schicht einer blasenfreien, fließfähigen Mischung eines Prepolymers mit einem Vernetzer abgedeckt ist, die durch Vernetzung mit dem Armierungsband verbunden wird, dadurch gekennzeichnet, daß die Mischung auf das auf einem rotierenden Zylinder aufgespannte Armierungsband in einem sich langsam parallel zur Zylinderachse verschiebenden Gießstrahl aufgegossen wird.

2. Verfahren zur Herstellung eines zugfesten, undurchlässigen, biegsamen Bandes, das wenigstens ein Zugkräfte aufnehmendes Armierungsband enthält, welches wenigstens einseitig durch eine es durchsetzende, undurchlässige Schicht einer blasenfreien, fließfähigen Mischung eines Prepolymers mit einem Vernetzer abgedeckt ist, die durch Vernetzung mit dem Armierungsband verbunden wird, dadurch gekennzeichnet, daß das Armierungsband an der Innenwand eines schnell rotierenden Zylinderrohres anliegt und durch Übergießen mit der Mischung getränkt wird.

3. Verfahren zur Herstellung eines zugfesten, undurchlässigen, biegsamen Bandes, das wenigstens ein Zugkräfte aufnehmendes Armierungsband enthält, welches wenigstens einseitig durch eine es durchsetzende, undurchlässige Schicht einer blasenfreien, fließfähigen Mischung eines Prepolymers mit einem Vernetzer abgedeckt ist, die durch Vernetzung mit dem Armierungsband verbunden wird, dadurch gekennzeichnet, daß die Mischung auf das über wenigstens zwei Rollen geführte Armierungsband aufgegossen wird.

4. Verfahren nach einem der Ansprüche 1-3, dadurch gekennzeichnet, daß als Armierungsband ein ein- oder mehrlagiges Gewebe aus Fäden eines oder mehrerer der Werkstoffe Polyamid, Polyester, Poly(1,4-phenylenterephthalamid) Metall u. ä. dient.

5. Verfahren nach einem der Ansprüche 1-4, dadurch gekennzeichnet, daß die beim Beschichten des Armierungsbandes mit der Prepolymermischung entstehende rillige Oberfläche nach dem Abbinden des Prepolymers und einer vorgeschriebenen Aushärtezeit zur Erzielung einer glatten Bandoberfläche abgedreht oder naß abgeschliffen wird.

6. Verfahren zur Herstellung eines festen, undurchlässigen, biegsamen Bandes, das wenigstens ein Zugkräfte aufnehmendes Armierungsband enthält, welches wenigstens einseitig durch eine es durchsetzende, undurchlässige Schicht einer blasenfreien, fließfähigen Mischung eines Prepolymers mit einem Vernetzer abgedeckt ist, die durch Vernetzung mit dem Armierungsband verbunden wird, dadurch gekennzeichnet, daß die Mischung in eine senkrecht oder schräg stehende Gießform eingebracht wird, in der sich das Armierungsband befindet.

7. Verfahren nach Anspruch 6, dadurch gekennzeichnet, daß als Armierungsband ein ein- oder mehrlagiges Gewebe aus Fäden eines oder mehrerer der Werkstoffe Polyamid, Polyester, Poly(1,4-phenylenterephthalamid), Metall u. ä. dient.

8. Verfahren nach Anspruch 6 oder 7, dadurch gekennzeichnet, daß die beim Beschichten des Armierungsbandes mit der Prepolymermischung entstehende rillige Oberfläche nach dem Abbinden des Prepolymers und einer vorgeschriebenen Aushärtezeit zur Erzielung einer glatten Bandoberfläche abgedreht oder naß abgeschliffen wird.

**Claims**

1. A process of producing an inextendible, impermeable, flexible belt, which includes at least one reinforcing belt receiving tensional forces, said reinforcing belt being covered on at least one side thereof by an impervious layer of a bubble-free, flowable mixture of a prepolymere penetrating it provided with a cross-linking agent, which layer is joined to the reinforcing belt by crosslinking, characterized in that the mixture is poured onto the reinforcing belt, stretched onto a rotating cylinder in a pouring stream that slowly shifts parallel to the cylinder axis.

2. A process of producing an inextendible, impermeable, flexible belt, which includes at least one reinforcing belt receiving tensional forces, said reinforcing belt being covered on at least one side thereof by an impervious layer of a bubble-free, flowable mixture of a prepolymere penetrating it provided with a crosslinking agent, which layer is joined to the reinforcing belt by crosslinking, characterized in that the reinforcing belt engages the inside wall of a rapidly rotating cylinder tube and is impregnated by pouring said mixture thereover.

3. A process of producing an inextendible, impermeable, flexible belt, which includes at least one reinforcing belt receiving tensional forces, said reinforcing belt being covered on at least one side thereof by an impervious layer of a bubble-free, flowable mixture of a prepolymere penetrating it provided with a crosslinking agent, which layer is joined to the reinforcing belt by crosslinking, characterized in that the mixture is poured onto the reinforcing belt which is guided over at least two rollers.

4. A process according to one of the claims 1 through 3, characterized in that said reinforcing belt comprises at least a single layer or multilayer fabric made of filaments selected from polyamide, polyester Kevlar®, Poly(1,4-phenylenterephthalamid), metal and similar materials.

5. A process according to one of the claims 1 through 4, characterized in that the grooved surface which is formed during the coating of the reinforcing belt with the prepolymere mixture is trued or wet ground after setting of the prepolymere and a prescribed pouring time so as to achieve a smooth belt surface.

6. A process of producing an inextendible, impermeable, flexible belt, which includes at least one reinforcing belt receiving tensional forces, said reinforcing belt being covered on at least one side thereof by an impervious layer of a bubble-free, flowable mixture of a prepolymere penetrating it provided with a crosslinking agent, which layer is joined to the reinforcing belt by crosslinking, characterized in that the mixture is applied into a vertically or inclined positioned pouring mold which includes the reinforcing belt.

7. A process according to claim 6, characterized in that the reinforcing belt is a single- or multi-layered fabric made of filaments selected from polyamide, polyester, Kevlar®, Poly(1,4-phenylenterephthalamid), metal and similar materials.

8. A process according to claim 6 or 7, characterized in that the grooved surface which is formed during the coating of the reinforcing belt with the prepolymere mixture is trued or wet ground after setting of the prepolymere and a prescribed pouring time so as to achieve a smooth belt surface.

**Revendications**

1. Procédé de fabrication d'une bande flexible, imperméable résistant à la traction qui contient au moins une bande d'armature absorbant les forces de traction laquelle est recouverte au moins d'un côté d'une couche imperméable continue réalisée au moyen d'un mélange fluide, sans bulles d'un prépolymère et d'un agent de réticulation, couche liée à la bande d'armature par réticulation, caractérisé par le fait que le mélange est coulé sur la bande d'armature tendue sur un cylindre tournant en un jet de coulée qui se déplace lentement parallèlement à l'axe du cylindre.

2. Procédé de fabrication d'une bande flexible imperméable résistant à la traction qui contient au moins une bande d'armature absorbant les forces de traction laquelle est recouverte au moins d'un côté d'une couche imperméable continue d'un mélange fluide sans bulles d'un prépolymère et d'un agent de réticulation, couche liée par réticulation à la bande d'armature, caractérisé par le fait que la bande d'armature qui s'appuie contre la paroi intérieure d'un tube cylindrique tournant rapidement est imprégnée du mélange par coulée de ce mélange.

3. Procédé de fabrication d'une bande flexible imperméable résistant à la traction qui contient au moins une bande d'armature absorbant les forces de traction laquelle est recouverte au moins d'un côté d'une couche imperméable continue d'un mélange fluide sans bulles d'un prépolymère et d'un agent de réticulation, couche liée par réticulation à la bande d'armature, caractérisé par le fait que le mélange est coulé sur la bande d'armature qui est guidée par au moins deux rouleaux.

4. Procédé selon l'une quelconque des revendications 1 à 3, caractérisé par le fait que la bande d'armature est un tissu mono ou multicouche de fils d'une ou de plusieurs des matières suivantes : polyamide, polyester, poly(1,4-phénylentéréphtalamide), métal et matière analogues.

5. Procédé selon l'une quelconque des revendications 1 à 4, caractérisé par le fait que la surface rainurée se produisant lors de l'application sur la bande d'armature du mélange de prépolymère est polie ou meulée à l'état humide après la prise du prépolymère et après un temps de durcissement prédéterminé, en vue d'obtenir une surface lisse de la bande.

6. Procédé de fabrication d'une bande flexible, imperméable résistant à la traction qui contient au moins une bande d'armature absorbant les forces de traction laquelle est recouverte au moins d'un côté d'une couche imperméable continue réalisée en un mélange fluide, sans bulles d'un prépolymère et d'un agent de réticulation, couche liée à la bande d'armature par réticulation, caractérisé par le fait que le mélange est introduit dans un moule placé verticalement ou obliquement et à l'intérieur duquel se trouve la bande d'armature.

7. Procédé selon la revendication 6, caractérisé par le fait que la bande d'armature est un tissu mono- au multicouche en fils d'une ou de plusieurs des matières suivantes : polyamide, polyester, poly(1,4-phénylentéréphtalamide), métal et matières analogues.

8. Procédé selon l'une quelconque des revendications 6 ou 7, caractérisé par le fait que la surface rainurée se produisant lors de l'application sur la bande d'armature du mélange de prépolymère est polie ou meulée à l'état humide après la prise du prépolymère et après un temps de durcissement prédéterminé, en vue d'obtenir une surface lisse de la bande.